# EUROPEAN PATENT APPLICATION

(11) **EP 4 852 088 A1**
(43) Date of publication of application: **09.12.2026**
(21) Application number: 25748229.9
(22) Date of filing: 20.01.2025
(51) Int. Cl.: H01M 4/38, H01M 4/36

(54) **NEGATIVE ELECTRODE ACTIVE MATERIAL AND BATTERY**

(30) Priority: 31.01.2024 JP 2024013700
(71) Applicant: Panasonic Intellectual Property Management Co., Ltd., Kadoma-shi, Osaka 571-0057 (JP)
(72) Inventor: TAKAHASHI, Chihiro, kadoma-shi, Osaka 571-0057 (JP); SAKATA, Motohiro, kadoma-shi, Osaka 571-0057 (JP); SATO, Yosuke, kadoma-shi, Osaka 571-0057 (JP); SATO, Shin, kadoma-shi, Osaka 571-0057 (JP)
(74) Representative: Novagraaf International SA
(86) International application number: PCT/JP2025/001640
(87) International publication number: WO 2025/164420

(57) **Abstract**

A negative electrode active material 10 of the present disclosure includes a composite particle 11 and a coating layer 12 covering at least a part of the surface of the composite particle 11. The composite particle 11 includes particulate silicon-containing phases 13 and a phase 14 of a first hydrophobic polymer present between the silicon-containing phases 13. The coating layer 12 contains an inorganic acid salt and a second hydrophobic polymer.

## Description

### TECHNICAL FIELD

The present disclosure relates to a negative electrode active material and a battery.

### BACKGROUND ART

In recent years, secondary batteries such as lithium-ion batteries have been widely used as power sources for electronic devices such as mobile terminals, power sources for vehicles such as electric vehicles, etc. In recent years, the use of materials containing silicon (Si) has been attracting attention as negative electrode active materials having a high theoretical capacity density. As materials containing silicon, for example, a material in which silicon particles are dispersed in a SiO₂ phase, and a material in which silicon particles are dispersed in a lithium silicate phase containing Li, Si, and O (hereinafter sometimes referred to as "LSX") are known.

A material containing silicon tends to be gradually eroded by side reactions within a battery including a non-aqueous electrolyte. The material containing silicon deteriorates due to this erosion, resulting in a decrease in the charge-discharge cycle characteristics of the battery. Therefore, as a negative electrode active material capable of suppressing deterioration caused by such side reactions, for example, PATENT LITERATURE 1 proposes a negative electrode active material having a configuration in which at least parts of the surfaces of particles of a material containing silicon (silicon-containing particles) are covered with a coating layer containing a lithium sulfonate compound and a hydrophobic polymer compound.

### CITATION LIST

### Patent Literature

| | |
|---|---|
| PATENT LITERATURE 1: | WO 2023/190239 A1 |

### SUMMARY OF INVENTION

### Technical Problem

However, the negative electrode active material disclosed in PATENT LITERATURE 1 has room for improvement in the charge-discharge cycle characteristics of the battery.

The present disclosure proposes a technology for a negative electrode active material using a material containing silicon to improve the charge-discharge cycle characteristics of a battery.

### Solution to Problem

A negative electrode active material of the present disclosure includes:
a composite particle; and
a coating layer covering at least a part of a surface of the composite particle, wherein
the composite particle includes particulate silicon-containing phases and a phase of a first hydrophobic polymer present between the silicon-containing phases, and
the coating layer contains an inorganic acid salt and a second hydrophobic polymer.

### Advantageous Effects of Invention

According to the technology of the present disclosure, for a negative electrode active material using a material containing silicon, it is possible to improve the charge-discharge cycle characteristics of a battery.

### BRIEF DESCRIPTION OF THE DRAWINGS

FIG. 1 is a cross-sectional view showing a schematic configuration of an example of a negative electrode active material according to Embodiment 1.
FIG. 2 is a cross-sectional view showing a schematic configuration of an example of a silicon-containing phase formed of a composite material containing Si.
FIG. 3 is a vertical cross-sectional view schematically showing an example of a battery according to Embodiment 2.

### DESCRIPTION OF EMBODIMENTS

Hereinafter, embodiments of the present disclosure will be described in detail with reference to the drawings. The present disclosure is not limited to the following embodiments.

### (Embodiment 1)

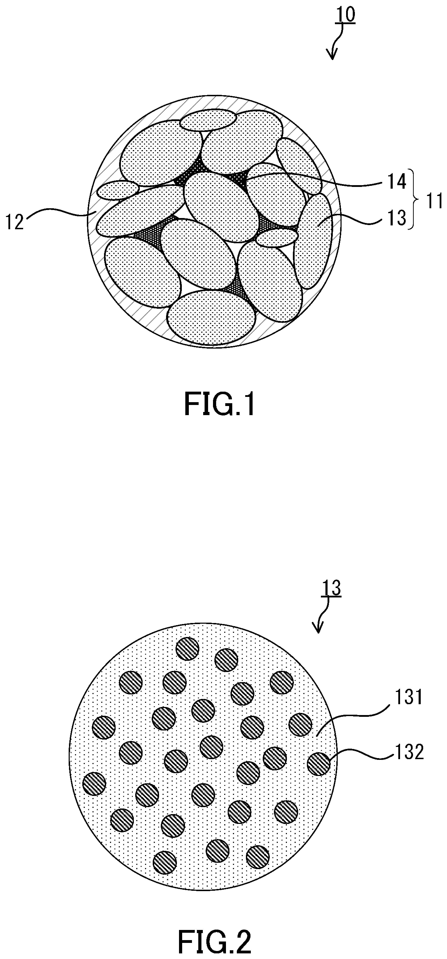

FIG. 1 is a cross-sectional view showing a schematic configuration of an example of a negative electrode active material according to Embodiment 1. The negative electrode active material 10 according to Embodiment 1 includes a composite particle 11 and a coating layer 12 covering at least a part of the surface of the composite particle 11. The composite particle 11 includes particulate silicon-containing phases 13 and a phase 14 of a first hydrophobic polymer present between the silicon-containing phases 13. The coating layer 12 contains an inorganic acid salt and a second hydrophobic polymer.

In the negative electrode active material 10 according to Embodiment 1, as described above, the composite particle 11 has a configuration in which the phase 14 of the first hydrophobic polymer is present between the particulate silicon-containing phases 13. In other words, this configuration means that the first hydrophobic polymer is present inside the composite particle 11. Furthermore, the coating layer 12 provided on the surface of the composite particle 11 contains the inorganic acid salt and the second hydrophobic polymer. Owing to these configurations, in the negative electrode active material 10 according to Embodiment 1, side reactions with an electrolyte within a battery are suppressed by the coating layer 12, and particle collapse from inside the composite particle 11 during charge and discharge of the battery is also suppressed by the phase 14 of the first hydrophobic polymer. Thus, the negative electrode active material 10 according to Embodiment 1 can suppress deterioration from both the particle interior and the particle surface, and thus can improve the charge-discharge cycle characteristics of the battery. Furthermore, owing to the above configuration, the negative electrode active material 10 according to Embodiment 1 can also improve the initial charge-discharge efficiency of the battery.

In the negative electrode active material 10, the mass ratio of the total of the content of the first hydrophobic polymer and the content of the second hydrophobic polymer to the content of the inorganic acid salt is, for example, 0.3 or more and 10 or less, and may be 1 or more and 10 or less, or 1 or more and 4 or less. By the inorganic acid salt and the hydrophobic polymer satisfying such a relationship, side reactions on the surface of the negative electrode active material 10 can be effectively suppressed, and particle collapse from inside the composite particles 11 can also be effectively suppressed. Therefore, the charge-discharge cycle characteristics of the battery can be further improved.

The content of the inorganic acid salt and the total of the content of the first hydrophobic polymer and the content of the second hydrophobic polymer in the negative electrode active material 10 are determined by the following method. As an example, the case where the first hydrophobic polymer and the second hydrophobic polymer are each a fluorine-containing hydrophobic polymer (for example, polyvinylidene fluoride (PVDF)) will be described.

The negative electrode active material 10 is washed with N-methyl-2-pyrrolidone (NMP) to dissolve the fluorine-containing hydrophobic polymer, and the difference in mass before and after dissolution is determined as the mass of the fluorine-containing hydrophobic polymer. The mass of this fluorine-containing hydrophobic polymer is regarded as the total of the content of the first hydrophobic polymer and the content of the second hydrophobic polymer in the negative electrode active material 10. Then, the residue that does not dissolve in NMP is washed with water to dissolve the inorganic acid salt. The mass of the inorganic acid salt dissolved in water is determined by quantitative analysis such as ICP emission spectrometry. This mass of the inorganic acid salt is regarded as the content of the inorganic acid salt in the negative electrode active material 10.

The mass of the residue that does not dissolve in water and NMP is determined as the mass of the portion of the composite particle 11 excluding the first hydrophobic polymer. When the composite particle 11 includes a conductive layer on the surface thereof, the residue that does not dissolve in water and NMP is quantitatively analyzed for carbon using a carbon/sulfur analyzer or the like, and the determined amount of carbon is determined to be derived from a carbon material in the conductive layer.

Using the content of the inorganic acid salt and the content of the fluorine-containing hydrophobic polymer (the total of the content of the first hydrophobic polymer and the content of the second hydrophobic polymer) obtained above, the mass ratio of the total of the content of the first hydrophobic polymer and the content of the second hydrophobic polymer to the content of the inorganic acid salt ((total of content of first hydrophobic polymer and content of second hydrophobic polymer)/content of inorganic acid salt) is determined.

Regarding the negative electrode active material 10, when the addition amounts of the first hydrophobic polymer added to the portion of the composite particle 11 excluding the first hydrophobic polymer, that is, the particle before the first hydrophobic polymer is added, and the second hydrophobic polymer added for the production of the coating layer 12, as well as the addition amount of the inorganic acid salt added for the production of the coating layer 12, are known, it is also possible to determine the mass ratio of the total of the content of the first hydrophobic polymer and the content of the second hydrophobic polymer to the content of the inorganic acid salt, using these addition amounts.

The mass ratio of the mass of the inorganic acid salt contained in the coating layer 12 to the mass of the portion of the composite particle 11 excluding the first hydrophobic polymer (hereinafter referred to as the "supported amount of the inorganic acid salt") is, for example, 2 mass% or more and 30 mass% or less, and may be 3 mass% or more and 17 mass% or less, 4 mass% or more and 16 mass% or less, or 5 mass% or more and 15 mass% or less.

The mass of the portion of the composite particle 11 excluding the first hydrophobic polymer and the mass of the inorganic acid salt contained in the coating layer 12 can be determined by the method described above. Also, regarding the negative electrode active material 10, when the mass of the portion of the composite particle 11 excluding the first hydrophobic polymer, that is, the mass of the particle before the first hydrophobic polymer is added, and the addition amount of the inorganic acid salt added to the particle are known, it is also possible to determine the supported amount of the inorganic acid salt, using the mass of the particle before the first hydrophobic polymer is added and the addition amount of the inorganic acid salt.

When the supported amount of the inorganic acid salt is 2 mass% or more, the surface of the composite particle 11 can be sufficiently covered with the inorganic acid salt, and the effect of suppressing side reactions by the inorganic acid salt is easily obtained. When the supported amount of the inorganic acid salt is 30 mass% or less, a low-resistance coating layer 12 and a low-resistance negative electrode active material 10 are easily obtained. When the coating layer 12 containing the inorganic acid salt and the second hydrophobic polymer is to be formed, for example, an amount of the inorganic acid salt in the above range is supported on the surface of the composite particle 11.

The mass ratio of the total of the mass of the first hydrophobic polymer contained in the composite particle 11 and the mass of the second hydrophobic polymer contained in the coating layer 12 to the mass of the portion of the composite particle 11 excluding the first hydrophobic polymer (hereinafter referred to as "supported amount of the hydrophobic polymer") is, for example, 2 mass% or more and 40 mass% or less, and may be 5 mass% or more and 20 mass% or less.

The mass of the portion of the composite particle 11 excluding the first hydrophobic polymer, and the total of the mass of the first hydrophobic polymer contained in the composite particle 11 and the mass of the second hydrophobic polymer contained in the coating layer 12 can be determined by the method described above. Further, regarding the negative electrode active material 10, when the mass of the portion of the composite particle 11 excluding the first hydrophobic polymer, that is, the mass of the particle before the first hydrophobic polymer is added, the addition amount of the first hydrophobic polymer added to the particle, and the addition amount of the second hydrophobic polymer added for the production of the coating layer 12 are known, it is also possible to determine the supported amount of the hydrophobic polymer, using the mass of the particle before the first hydrophobic polymer is added and the addition amounts of the first hydrophobic polymer and the second hydrophobic polymer.

Each component of the negative electrode active material 10 according to Embodiment 1 will be specifically described below.

### (Composite Particle)

As described above, the composite particle 11 includes the particulate silicon-containing phases 13 and the phase 14 of the first hydrophobic polymer present between the silicon-containing phases 13. Hereinafter, the phase 14 of the first hydrophobic polymer is referred to as hydrophobic polymer phase 14.

The silicon-containing phases 13 are particulate phases made of a silicon-containing material. In this description, the silicon-containing material refers to a material containing Si. Examples of the material containing Si include Si, Si alloys, Si compounds, and composite materials containing Si.

The silicon-containing phases 13 may be silicon phases. That is, each silicon-containing phase 13 may be a particulate phase of elemental Si. Such a silicon phase is composed of a single crystallite or a plurality of crystallites. When each silicon-containing phase 13 is the silicon phase, not only improvement of the charge-discharge cycle but also an increase in capacity can be achieved. The silicon-containing phases 13 may be composed of silicon particles.

Each silicon-containing phase 13 may be formed of a composite material containing Si. The composite material containing Si may include, for example, an ion-conducting phase and a silicon phase dispersed in the ion-conducting phase. FIG. 2 is a cross-sectional view showing a schematic configuration of an example of a silicon-containing phase 13 formed of a composite material containing Si. The silicon-containing phase 13 may include an ion-conducting phase 131 and a silicon phase 132 dispersed in the ion-conducting phase 131 as shown in FIG. 2. When the silicon-containing phase 13 is formed of a composite material having such a configuration, the stress caused by expansion and contraction of the silicon phase 132 during charge and discharge is alleviated by the ion-conducting phase 131, thereby suppressing cracks and fractures in the silicon-containing phase 13. Therefore, the deterioration of the composite particle 11 from inside the particle during charge and discharge of the battery can be further suppressed, thereby further improving the charge-discharge cycle characteristics.

The ion-conducting phase 131 may include at least one selected from the group consisting of an aluminate phase, a silicate phase, a silicon oxide phase, and a carbon phase.

The aluminate phase preferably contains an alkali metal element (Group 1 element other than hydrogen in the long-form periodic table). The alkali metal element includes lithium (Li), potassium (K), sodium (Na), etc. The aluminate phase may be a lithium aluminate phase containing lithium (Li), aluminum (Al), and oxygen (O). The lithium aluminate phase may further contain another element in addition to Li, Al, and O. An example of the other element is at least one selected from the group consisting of calcium (Ca), magnesium (Mg), zirconium (Zr), iron (Fe), boron (B), phosphorus (P), and lanthanum (La).

The silicate phase preferably contains at least one of an alkali metal element (Group 1 element other than hydrogen in the long-form periodic table) and a Group 2 element in the long-form periodic table. The alkali metal element includes lithium (Li), potassium (K), sodium (Na), etc. The Group 2 element includes magnesium (Mg), calcium (Ca), strontium (Sr), barium (Ba), etc. The silicate phase may be a lithium silicate containing lithium (Li), silicon (Si), and oxygen (O). The silicate phase may also contain another element such as rare earth elements including lanthanum (La), etc., aluminum (Al), and boron (B).

The silicon oxide phase is composed of a compound of silicon (Si) and oxygen (O). The main component (for example, 95 mass% or more and 100 mass% or less) of the silicon oxide phase may be silicon dioxide.

The carbon phase may be composed of, for example, amorphous carbon. The amorphous carbon may be hard carbon, soft carbon, or other carbon. Amorphous carbon generally refers to a carbon material in which an average interlayer spacing d002 of the (002) plane, measured by X-ray diffraction, exceeds 0.34 nm. Since the carbon phase has electrical conductivity, it results in improved battery characteristics such as initial charge-discharge efficiency and charge-discharge cycle characteristics of the battery.

The average particle diameter of the silicon-containing phases 13 is, for example, 3 µm or less, and may be 1.5 µm or less. By appropriately fining the silicon-containing phases 13, the change in volume during charge and discharge is reduced, and the structural stability is improved. In addition, expansion and contraction of the silicon-containing phases 13 are uniformized to suppress particle fractures, thereby further improving the charge-discharge cycle characteristics. The average particle diameter of the silicon-containing phases 13 is, for example, 1 nm or more.

The average particle diameter of the silicon-containing phases 13 can be measured using an SEM image obtained by observing a cross-section of the negative electrode active material 10 in which a cross-section of the silicon-containing phase 13 is exposed, with a scanning electron microscope (SEM). Specifically, the average particle diameter of the silicon-containing phases 13 is determined by averaging the maximum diameters of 100 silicon-containing phases 13 arbitrarily selected from the cross-sectional SEM image of the negative electrode active material 10.

The hydrophobic polymer phase 14 is present between the silicon-containing phases 13. That is, the hydrophobic polymer phase 14 is present inside the composite particle 11. Owing to this configuration, particle collapse from inside the composite particle 11 caused by expansion and contraction of the silicon-containing phases 13 during charge and discharge of the battery is suppressed.

The first hydrophobic polymer constituting the hydrophobic polymer phase 14 may have good binding properties and thermal fusibility. In this case, the first hydrophobic polymer can firmly support the silicon-containing phases 13 together, thereby further suppressing particle collapse from inside the composite particles 11 during charge and discharge. The first hydrophobic polymer is almost insoluble in water.

The first hydrophobic polymer constituting the hydrophobic polymer phase 14 includes, for example, a fluorine-containing hydrophobic polymer. The fluorine-containing hydrophobic polymer has good binding properties and high stability against the electrolyte, and thus can effectively suppress the deterioration of the composite particle 11 caused by charge and discharge. Therefore, the charge-discharge cycle characteristics of the battery can be further improved.

The fluorine-containing hydrophobic polymer may include at least one selected from the group consisting of polyvinylidene fluoride (PVDF), polytetrafluoroethylene, perfluoroalkoxy alkane, perfluoroethylene propene copolymer, ethylene tetrafluoroethylene copolymer, polychlorotrifluoroethylene, and ethylene chlorotrifluoroethylene copolymer. The fluorine-containing hydrophobic polymer used as the first hydrophobic polymer may include PVDF. Since PVDF has good binding properties, PVDF can firmly bind the silicon-containing phases 13 together, thereby more effectively suppressing the deterioration of the composite particle 11 caused by charge and discharge. Therefore, the charge-discharge cycle characteristics of the battery can be further improved. Also, when the fluorine-containing hydrophobic polymer used as the first hydrophobic polymer is PVDF, since PVDF has a low melting point, the effect of being able to form the negative electrode active material 10 at a low heat treatment temperature can also be obtained.

The fluorine-containing hydrophobic polymer used as the first hydrophobic polymer may include, in addition to PVDF, a polymer including vinylidene fluoride units. Examples of the polymer including vinylidene fluoride units include copolymers of vinylidene fluoride with other monomers. Examples of the other monomers include hexafluoropropylene (HFP) and tetrafluoroethylene (TFE). Examples of the polymer including vinylidene fluoride units include polyvinylidene fluoride and modified products thereof, vinylidene fluoride-hexafluoropropylene copolymer, and vinylidene fluoride-chlorotrifluoroethylene copolymer. In the polymer including vinylidene fluoride units, the content rate of vinylidene fluoride units is, for example, 30 mol% or more, and may be 50 mol% or more.

The presence of the hydrophobic polymer phase 14 between the silicon-containing phases 13 inside the composite particle 11 can be confirmed by energy-dispersive X-ray spectroscopy combined with a scanning electron microscope (SEM-EDX). Specifically, from a backscattered electron image (SEM image) of a cross-section of the negative electrode active material 10 in which a cross-section of the composite particle 11 is exposed, elemental mapping analysis by EDX is performed, whereby the position of the hydrophobic polymer phase 14 present within the composite particle 11 can be confirmed.

In addition to SEM-EDX, the presence of the hydrophobic polymer phase 14 inside the composite particle 11 can also be confirmed by performing surface analysis on the negative electrode active material 10 by X-ray photoelectron spectroscopy (XPS).

The composite particle 11 may have a configuration in which the silicon-containing phases 13 are dispersed within the hydrophobic polymer phase 14. That is, the composite particle 11 may have a sea-island structure in which the regions of the silicon-containing phases 13 are regarded as islands and the region of the hydrophobic polymer phase 14 is regarded as a sea.

The average particle diameter of the composite particle 11 may be 3 µm or more and 15 µm or less, 5 µm or more and 14 µm or less, or 6 µm or more and 10 µm or less. With the above configuration, the stress caused by change in the volume of the composite particle 11 due to charge and discharge is easily alleviated, and good charge-discharge cycle characteristics are easily obtained. In addition, the surface area of the composite particle 11 becomes appropriate, thereby suppressing a decrease in capacity due to side reactions with the electrolyte.

The average particle diameter of the composite particle 11 means a particle diameter at which a volumetric integrated value is 50% in a particle size distribution measured by a laser diffraction scattering method (volume-average particle diameter, D50). For the measurement apparatus, "LA-750", manufactured by HORIBA, Ltd., may be used, for example.

The composite particle 11 can be taken out of the battery by the following method, for example. The following method is an example.

First, the battery in a fully discharged state is disassembled to take out a negative electrode, and the negative electrode is washed with, for example, anhydrous ethyl methyl carbonate or dimethyl carbonate to remove the non-aqueous electrolyte component. A negative electrode mixture layer is peeled from a current collector (for example, copper foil) that is a negative electrode core, and the mixture layer is crushed with a mortar to obtain a sample powder. Next, the sample powder is dried in a dry atmosphere for 1 hour and immersed in, for example, gently boiled 6M hydrochloric acid for about 10 minutes to remove elements derived from components other than the composite particle. Next, the sample powder is washed with ion-exchanged water, filtered, and dried at 200°C for 1 hour, for example. The fully discharged state is a state where a depth of discharge (DOD) is 90% or more (the state of charge (SOC) is 10% or less).

### (Coating Layer)

As described above, the coating layer 12 contains the inorganic acid salt and the second hydrophobic polymer. By covering at least a part of the surface of the composite particle 11 with the coating layer 12, contact between the composite particle 11 and the electrolyte is hindered, and thus side reactions between the negative electrode active material 10 and the electrolyte are suppressed. Accordingly, erosion of the composite particle 11 due to the side reactions is suppressed, and thus deterioration from the surface of the negative electrode active material 10 caused by the erosion is suppressed. Therefore, the charge-discharge cycle characteristics of the battery are improved, and the charge-discharge efficiency thereof is also improved. The coating layer 12 may be a layer containing a mixture of the inorganic acid salt and the second hydrophobic polymer, or may be a layer composed of a mixture of the inorganic acid salt and the second hydrophobic polymer. In the coating layer 12, the mixture of the inorganic acid salt and the second hydrophobic polymer may be a mixture in which the inorganic acid salt and the second hydrophobic polymer are mixed three-dimensionally and randomly, or may be a mixture in which the inorganic acid salt and the second hydrophobic polymer are mixed such that the mixture has an overall uniform composition.

Since the coating layer 12 contains the inorganic acid salt, the coating layer 12 has good ionic conductivity, and thus can suppress side reactions in the battery. Since the coating layer 12 contains the second hydrophobic polymer, the retention of the inorganic acid salt on the surface of the composite particle 11 is improved, and the surface of the composite particle 11 is effectively covered with the inorganic acid salt. Accordingly, a significant effect of suppressing the side reactions between the negative electrode active material 10 and the electrolyte is obtained. Therefore, the charge-discharge cycle characteristics of the battery, and further the charge-discharge efficiency, are improved.

The inorganic acid salt may be, for example, a lithium sulfonate compound. The lithium sulfonate compound is a lithium salt of a sulfonic acid compound. Here, the sulfonic acid compound is an organic compound having a sulfonic acid group (SO₃H). The sulfonic acid compound may be a monosulfonic acid compound or a disulfonic acid compound. When the lithium sulfonate compound is contained in the coating layer 12, the ionic conductivity of the coating layer 12 is further improved, thereby further suppressing side reactions in the battery.

The lithium sulfonate compound may be a compound represented by the following general formula (1). In the general formula (1), R is an n-valent hydrocarbon group that may have a substituent, and n is 1 or 2.

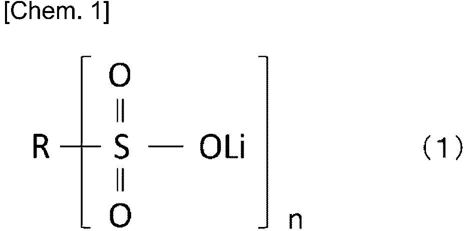

The number of carbon atoms in the hydrocarbon group is not particularly limited as long as the number is 1 or more. The number of carbon atoms in the hydrocarbon group may be, for example, 20 or less, 10 or less, or 5 or less. The substituent may be, for example, a halogen or a fluorine atom. The hydrocarbon group may be an aliphatic hydrocarbon group. In the general formula (1), R may be an n-valent aliphatic hydrocarbon group having 1 to 5 carbon atoms.

The inorganic acid salt includes, for example, at least one selected from the group consisting of lithium methanesulfonate, lithium ethanesulfonate, and lithium propanesulfonate. The inorganic acid salt may include lithium methanesulfonate.

The second hydrophobic polymer may have good binding properties and thermal fusibility. In this case, the inorganic acid salt can be firmly supported on the surface of the composite particle 11 by the second hydrophobic polymer, thereby making it easy to stably obtain the effect of suppressing side reactions by the inorganic acid salt. The second hydrophobic polymer is almost insoluble in water.

The second hydrophobic polymer includes, for example, a fluorine-containing hydrophobic polymer. The fluorine-containing hydrophobic polymer has good binding properties and high stability against the electrolyte, and thus can more firmly support the inorganic acid salt on the surface of the composite particle 11, thereby making it easier to stably obtain the effect of suppressing side reactions by the inorganic acid salt.

The fluorine-containing hydrophobic polymer may include at least one selected from the group consisting of PVDF, polytetrafluoroethylene, perfluoroalkoxy alkane, perfluoroethylene propene copolymer, ethylene tetrafluoroethylene copolymer, polychlorotrifluoroethylene, and ethylene chlorotrifluoroethylene copolymer. The fluorine-containing hydrophobic polymer used as the second hydrophobic polymer may include PVDF. Since PVDF has good binding properties, PVDF can more firmly support the inorganic acid salt on the surface of the composite particle 11. Accordingly, the effect of suppressing side reactions by the inorganic acid salt can be obtained more stably. Also, when the fluorine-containing hydrophobic polymer used as the second hydrophobic polymer is PVDF, since PVDF has a low melting point, the effect of being able to form the negative electrode active material 10 at a low heat treatment temperature can also be obtained.

The fluorine-containing hydrophobic polymer used as the second hydrophobic polymer may include, in addition to PVDF, a polymer including vinylidene fluoride units. Examples of the polymer including vinylidene fluoride units include copolymers of vinylidene fluoride with other monomers. Examples of the other monomers include hexafluoropropylene (HFP) and tetrafluoroethylene (TFE). Examples of the polymer including vinylidene fluoride units include polyvinylidene fluoride and modified products thereof, vinylidene fluoride-hexafluoropropylene copolymer, and vinylidene fluoride-chlorotrifluoroethylene copolymer. In the polymer including vinylidene fluoride units, the content rate of vinylidene fluoride units is, for example, 30 mol% or more, and may be 50 mol% or more.

The hydrophobic polymer used as the second hydrophobic polymer may be the same compound as the hydrophobic polymer used as the first hydrophobic polymer in the composite particles 11, or may be a different compound. When the first hydrophobic polymer and the second hydrophobic polymer are the same compound, in the step of producing the coating layer 12, by allowing the hydrophobic polymer for producing the coating layer 12 to reach the interior of a precursor particle for the composite particle 11, the composite particle 11 can be produced simultaneously with the coating layer 12. Therefore, the negative electrode active material 10 can be manufactured efficiently.

The thickness of the coating layer 12 is desirably small so as not to substantially affect the average particle diameter of the negative electrode active material 10. From the viewpoint of protecting the composite particle 11 from an electrolyte solution, the thickness of the coating layer 12 may be 1 nm or more. From the viewpoint of suppressing an increase in resistance, the thickness of the coating layer 12 may be 300 nm or less. When the composite particle 11 includes a conductive layer, the thickness of the coating layer 12 may be smaller than the thickness of the conductive layer. The thickness of the coating layer 12 can be measured by observing a cross-section of the negative electrode active material 10 with an SEM or a transmission electron microscope (TEM).

### (Method for Producing Negative Electrode Active Material)

The negative electrode active material 10 of the present disclosure is produced, for example, by a production method including a step I of preparing precursor particles for composite particles 11, a step II of supplying the first hydrophobic polymer in a liquid phase to the precursor particles to form a hydrophobic polymer phase inside the precursor particles and obtain the composite particles 11, and a step III of forming the coating layer 12 on the surfaces of the composite particles 11. When the same compound is used as the first hydrophobic polymer and the second hydrophobic polymer, step II and step III may be carried out simultaneously. That is, by supplying the material of the coating layer 12 containing a hydrophobic polymer to the surfaces of the precursor particles for the composite particles 11, and allowing the hydrophobic polymer to reach the interiors of the precursor particles, the hydrophobic polymer phase is formed, and the coating layer 12 is also formed, whereby the negative electrode active material 10 can be produced.

### [Step I]

The precursor particles for the composite particles 11 are prepared. For example, when the silicon-containing phases 13 of the composite particles 11 are silicon phases, commercially available silicon may be used as raw material silicon.

### [Step II]

Step II is a step of obtaining the composite particles 11. For example, the first hydrophobic polymer in a liquid phase as the material of the hydrophobic polymer phase is supplied to the surfaces of the precursor particles, and the first hydrophobic polymer is allowed to reach the interiors of the precursor particles to form a hydrophobic polymer phase. Specifically, for example, a granulated powder is obtained by spray-drying a dispersion liquid containing the precursor particles and the first hydrophobic polymer. Accordingly, composite particles 11 in which the first hydrophobic polymer enters the interiors of the precursor particles and a hydrophobic polymer phase is formed, are obtained.

### [Step III]

Step III is a step of forming the coating layer 12 on the surfaces of the composite particles 11.

For example, after granulating the composite particles 11, the inorganic acid salt, and the second hydrophobic polymer, the granulated powder is crushed and classified to a desired size, thereby obtaining a negative electrode active material having a desired average particle diameter and having the coating layer 12 formed on the surfaces of the composite particles 11.

For example, a granulated powder is obtained by spray-drying a dispersion liquid of the composite particles 11, a powder of the inorganic acid salt, and the second hydrophobic polymer. The obtained granulated powder is classified to obtain a negative electrode active material 10 in which the coating layer 12 is formed on the surfaces of the composite particles 11. As another example, a powder of the inorganic acid salt and the second hydrophobic polymer in a liquid phase are added to the composite particles 11 and mixed, thereby adhering the inorganic acid salt and the second hydrophobic polymer to the surfaces of the composite particles 11 to obtain an intermediate (mixture). By performing heat treatment on this intermediate, the coating layer 12 may be formed on the surfaces of the composite particles 11.

It is also possible to carry out step II and step III simultaneously. For example, when the same compound is used as the first hydrophobic polymer and the second hydrophobic polymer, the precursor particles, a powder of the inorganic acid salt, and the hydrophobic polymer (the first hydrophobic polymer and the second hydrophobic polymer) are added and mixed, and the hydrophobic polymer phase inside the precursor particles and the coating layer 12 on the surfaces of the precursor particles may be formed simultaneously. Specifically, for example, a granulated powder is obtained by spray-drying a dispersion liquid of the precursor particles, a powder of the inorganic acid salt, and the hydrophobic polymer. The obtained granulated powder is classified to obtain a negative electrode active material 10 in which a hydrophobic polymer phase is formed inside the composite particles 11 and the coating layer 12 is formed on the surfaces of the composite particles 11.

### (Embodiment 2)

A battery according to Embodiment 2 includes a positive electrode, a negative electrode, and an electrolyte. The negative electrode contains the negative electrode active material according to Embodiment 1. Owing to this configuration, the battery according to Embodiment 2 has improved cycle characteristics and also has improved initial charge-discharge efficiency.

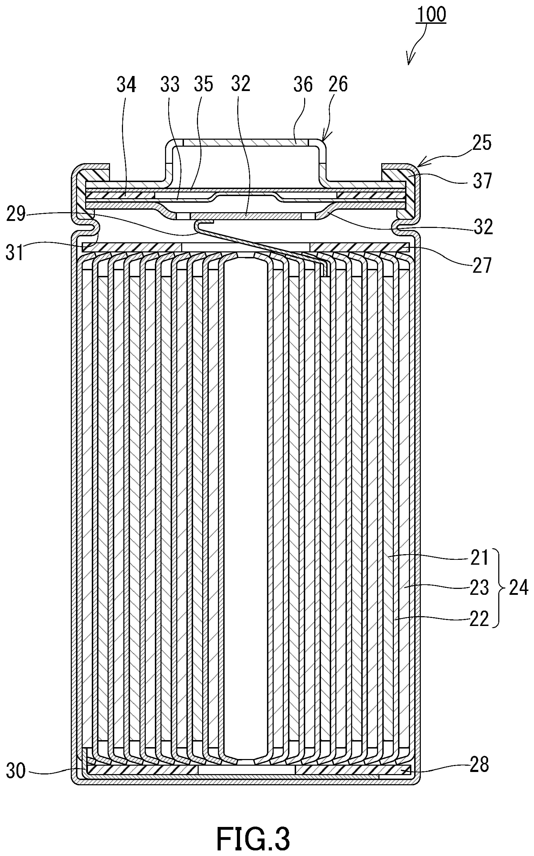

FIG. 3 is a vertical cross-sectional view schematically showing an example of the battery according to Embodiment 2. A battery 100 is a cylindrical battery including a cylindrical battery case, a wound electrode group 24, and an electrolyte solution which is not shown. The electrode group 24 is housed in the battery case and is in contact with the electrolyte solution.

The battery case is composed of a case body 25 which is a cylindrical metal container with a bottom, and a sealing body 26 which seals the opening of the case body 25. A gasket 37 is placed between the case body 25 and the sealing body 26. The airtightness of the battery case is ensured by the gasket 37. In the case body 25, insulating plates 27 and 28 are respectively placed at both ends of the electrode group 24 in the direction of the winding axis of the electrode group 24.

The case body 25 has, for example, a step portion 31. The step portion 31 can be formed by partially pressing the side wall of the case body 25 from the outside. The step portion 31 may be formed on the side wall of the case body 25 in an annular shape along the circumferential direction of an imaginary circle defined by the case body 25. At this time, the sealing body 26 is supported by, for example, the surface of the step portion 31 on the opening side.

The sealing body 26 includes a filter 32, a lower valve body 33, an insulating member 34, an upper valve body 35, and a cap 36. In the sealing body 26, these members are stacked in this order. The sealing body 26 is attached to the opening of the case body 25 such that the cap 36 is located outside the case body 25 and the filter 32 is located inside the case body 25.

Each of the above members constituting the sealing body 26 has, for example, a disk shape or a ring shape. The above members, except for the insulating member 34, are electrically connected to each other.

The electrode group 24 has a positive electrode 21, a separator 22, and a negative electrode 23. The positive electrode 21, the separator 22, and the negative electrode 23 are all strip-shaped. The width direction of the strip-shaped positive electrode 21 and negative electrode 23 is, for example, parallel to the winding axis of the electrode group 24. The separator 22 is placed between the positive electrode 21 and the negative electrode 23. The positive electrode 21 and the negative electrode 23 are spirally wound with the separator 22 interposed between these electrodes.

When a cross-section of the battery 100 in a direction perpendicular to the winding axis of the electrode group 24 is observed, the positive electrode 21 and the negative electrode 23 are stacked alternately in the radial direction of the imaginary circle defined by the case body 25, with the separator 22 interposed between these electrodes.

The positive electrode 21 is electrically connected via a positive electrode lead 29 to the cap 36 which also serves as a positive electrode terminal. One end of the positive electrode lead 29 is connected to, for example, the vicinity of the center of the positive electrode 21 in the longitudinal direction of the positive electrode 21. The positive electrode lead 29 extends from the positive electrode 21 to the filter 32 through a through hole formed in the insulating plate 27. The other end of the positive electrode lead 29 is welded to, for example, the surface of the filter 32 on the electrode group 24 side.

The negative electrode 23 is electrically connected via a negative electrode lead 30 to the case body 25 which also serves as a negative electrode terminal. One end of the negative electrode lead 30 is connected to, for example, an end portion of the negative electrode 23 in the longitudinal direction of the negative electrode 23. The other end of the negative electrode lead 30 is welded to, for example, the inner bottom surface of the case body 25.

Each component of the battery 100 will be specifically described below.

The positive electrode 21 contains a material that has the property of occluding and releasing metal ions (for example, lithium ions). The positive electrode 21 contains, for example, a positive electrode active material. The positive electrode 21 includes, for example, a positive electrode current collector and a positive electrode mixture layer supported on the surface of the positive electrode current collector.

As the positive electrode current collector, for example, a sheet or film made of a metal material such as aluminum, stainless steel, titanium, and alloys thereof can be used. Aluminum and alloys thereof are suitable as materials for positive electrode current collectors since these materials are inexpensive and easily made into thin films. The sheet or film may be porous or non-porous. As the sheet or film, a metal foil, a metal mesh, or the like is used. A carbon material such as carbon may be applied as a conductive auxiliary material to the surface of the positive electrode current collector.

The positive electrode mixture layer contains a positive electrode active material. The positive electrode active material may be a material having the ability to occlude and release metal ions (for example, lithium ions). As the positive electrode active material, lithium-containing transition metal oxides, lithium-containing transition metal phosphates, transition metal fluorides, polyanionic materials, fluorinated polyanionic materials, transition metal sulfides, transition metal oxysulfides, transition metal oxynitrides, etc., can be used. In particular, when a lithium-containing transition metal oxide or a lithium-containing transition metal phosphate is used as the positive electrode active material, the production cost of the battery can be reduced and the average discharge voltage can be increased. Examples of lithium-containing transition metal oxides include lithium cobalt oxide, lithium nickel cobalt aluminum oxide, lithium nickel cobalt manganese oxide, and lithium nickel manganese oxide. Examples of lithium-containing transition metal phosphates include lithium iron phosphate, lithium vanadium phosphate, lithium cobalt phosphate, and lithium nickel phosphate.

The positive electrode mixture layer may further contain a binder. Examples of the binder include fluorine-containing resins such as PVDF, polyacrylonitrile (PAN), polyimide, acrylic resin, polyolefin, and SBR. Additionally, these resins may be used in combination with carboxymethyl cellulose (CMC) or a salt thereof, polyacrylic acid (PAA) or a salt thereof, polyvinyl alcohol (PVA), and the like.

The positive electrode mixture layer may further contain a conductive additive. Examples of the conductive additive include carbon materials and conductive polymer compounds. Examples of carbon materials include carbon black, graphite, acetylene black, carbon nanotubes, carbon nanofibers, graphene, fullerene, and graphite oxide. Examples of conductive polymer compounds include polyaniline, polypyrrole, and polythiophene.

The negative electrode 23 contains a material that has the property of occluding and releasing metal ions (for example, lithium ions). The negative electrode 23 is a negative electrode that contains the negative electrode active material 10 according to Embodiment 1. The negative electrode 23 includes, for example, a negative electrode current collector and a negative electrode mixture layer supported on the surface of the negative electrode current collector.

The negative electrode current collector is, for example, a foil made of a metal material such as stainless steel, nickel, a nickel alloy, copper, or a copper alloy.

The negative electrode mixture layer contains the negative electrode active material 10 according to Embodiment 1. The negative electrode mixture layer may contain other materials such as a binder and a conductive additive, if necessary. As the binder and the conductive additive, the materials described above for the positive electrode mixture layer can also be used for the negative electrode mixture layer.

The electrolyte solution used as the electrolyte may contain a non-aqueous solvent and a lithium salt dissolved in the non-aqueous solvent. The concentration of the lithium salt in the electrolyte solution may be, for example, 0.5 mol/liter or more and 2 mol/liter or less. By controlling the lithium salt concentration within the above range, an electrolyte solution having excellent ionic conductivity and an appropriate viscosity can be obtained. However, the lithium salt concentration is not limited to the above.

As the non-aqueous solvent, cyclic carbonates, chain carbonates, cyclic ethers, chain ethers, nitriles, amides, etc., can be used. One solvent selected from these solvents may be used, or two or more of these solvents may be used in combination.

As the lithium salt, lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bisperfluoroethylsulfonylimide (LiN(SO₂C₂F₅)₂), LiAsF₆, LiCF₃SO₃, lithium difluoro(oxalato)borate, etc., can be used. One electrolyte salt selected from these electrolyte salts may be used, or two or more of these electrolyte salts may be used in combination.

Usually, it is desirable to interpose a separator between a positive electrode and a negative electrode. The separator 22 has a high ion permeability and has appropriate mechanical strength and insulating properties. As the separator 22, a microporous thin film, a woven fabric, a nonwoven fabric, or the like can be used. As the material of the separator 22, for example, a polymer can be used. The polymer may be a polyolefin such as polypropylene and polyethylene.

In the battery according to Embodiment 2, for example, a polymer provided as a separator may be impregnated with the electrolyte solution. That is, the battery according to Embodiment 2 may have a structure in which an electrolyte solution and a polymer are used in combination.

The battery according to Embodiment 2 may further include a solid electrolyte as the electrolyte. That is, the battery of the present disclosure may have a hybrid structure in which an electrolyte solution and a solid electrolyte are used in combination. Examples of solid electrolyte materials are halide solid electrolytes, sulfide solid electrolytes, oxide solid electrolytes, or organic polymer solid electrolytes. In the present disclosure, the term "halide solid electrolyte" refers to a solid electrolyte containing a halogen element as a main component of anions. The term "sulfide solid electrolyte" refers to a solid electrolyte containing sulfur as a main component of anions. The term "oxide solid electrolyte" refers to a solid electrolyte containing oxygen as a main component of anions. The main component of the anions means an anion with the largest amount of substance among all the anions constituting the solid electrolyte.

As an example of the structure of the battery according to Embodiment 2, the configuration example shown in FIG. 3, that is, a cylindrical non-aqueous electrolyte secondary battery in which a wound electrode group formed by winding a positive electrode and a negative electrode with a separator interposed therebetween and an electrolyte solution are housed in an exterior body, is described. However, the battery according to the present disclosure is not limited to this configuration example. The battery according to Embodiment 2 may be in any form, such as a prismatic type, a coin type, a button type, or a laminated type. Furthermore, as the electrode group in the battery according to Embodiment 2, an electrode group of another form, such as an electrode group in which a positive electrode and a negative electrode are stacked with a separator interposed therebetween, may be used instead of a wound electrode group.

### (Other Embodiments)

### (Additional Notes)

The following techniques are disclosed by the description of the above embodiments.

### (Technique 1)

A negative electrode active material including:
a composite particle; and
a coating layer covering at least a part of a surface of the composite particle, wherein
the composite particle includes particulate silicon-containing phases and a phase of a first hydrophobic polymer present between the silicon-containing phases, and
the coating layer contains an inorganic acid salt and a second hydrophobic polymer.

Owing to this configuration, the negative electrode active material according to Technique 1 can improve the charge-discharge cycle characteristics of a battery.

### (Technique 2)

The negative electrode active material according to Technique 1, wherein the silicon-containing phases have an average particle diameter of 3 µm or less.

Owing to this configuration, the negative electrode active material according to Technique 2 can further improve the charge-discharge cycle characteristics of the battery.

### (Technique 3)

The negative electrode active material according to Technique 1 or 2, wherein a mass ratio of a total of a content of the first hydrophobic polymer and a content of the second hydrophobic polymer to a content of the inorganic acid salt is 0.3 or more and 10 or less.

Owing to this configuration, the negative electrode active material according to Technique 3 can further improve the charge-discharge cycle characteristics of the battery.

### (Technique 4)

The negative electrode active material according to any one of Techniques 1 to 3, wherein a mass ratio of a mass of the inorganic acid salt contained in the coating layer to a mass of a portion of the composite particle excluding the first hydrophobic polymer is 2 mass% or more and 30 mass% or less.

Owing to this configuration, the negative electrode active material according to Technique 4 can further improve the charge-discharge cycle characteristics of the battery.

### (Technique 5)

The negative electrode active material according to any one of Techniques 1 to 4, wherein a mass ratio of a total of a mass of the first hydrophobic polymer contained in the composite particle and a mass of the second hydrophobic polymer contained in the coating layer to a mass of a portion of the composite particle excluding the first hydrophobic polymer is 2 mass% or more and 40 mass% or less.

Owing to this configuration, the negative electrode active material according to Technique 5 can further improve the charge-discharge cycle characteristics of the battery.

### (Technique 6)

The negative electrode active material according to any one of Techniques 1 to 5, wherein the inorganic acid salt includes at least one selected from the group consisting of lithium methanesulfonate, lithium ethanesulfonate, and lithium propanesulfonate.

Owing to this configuration, the negative electrode active material according to Technique 6 can further improve the charge-discharge cycle characteristics of the battery.

### (Technique 7)

The negative electrode active material according to any one of Techniques 1 to 6, wherein at least one selected from the group consisting of the first hydrophobic polymer and the second hydrophobic polymer includes a fluorine-containing hydrophobic polymer.

Owing to this configuration, the negative electrode active material according to Technique 7 can further improve the charge-discharge cycle characteristics of the battery.

### (Technique 8)

The negative electrode active material according to Technique 7, wherein the fluorine-containing hydrophobic polymer includes at least one selected from the group consisting of polyvinylidene fluoride, polytetrafluoroethylene, perfluoroalkoxy alkane, perfluoroethylene propene copolymer, ethylene tetrafluoroethylene copolymer, polychlorotrifluoroethylene, and ethylene chlorotrifluoroethylene copolymer.

Owing to this configuration, the negative electrode active material according to Technique 8 can further improve the charge-discharge cycle characteristics of the battery.

### (Technique 9)

The negative electrode active material according to any one of Techniques 1 to 8, wherein the silicon-containing phases are silicon phases.

Owing to this configuration, the negative electrode active material according to Technique 9 can achieve an increase in capacity in addition to improving the charge-discharge cycle.

### (Technique 10)

The negative electrode active material according to any one of Techniques 1 to 9, wherein
the silicon-containing phases are each formed of a composite material, and
the composite material includes an ion-conducting phase and a silicon phase dispersed in the ion-conducting phase.

Owing to this configuration, the negative electrode active material according to Technique 10 can further improve the charge-discharge cycle characteristics of the battery.

### (Technique 11)

The negative electrode active material according to Technique 10, wherein the ion-conducting phase includes at least one selected from the group consisting of an aluminate phase, a silicate phase, a silicon oxide phase, and a carbon phase.

Owing to this configuration, the negative electrode active material according to Technique 11 can further improve the charge-discharge cycle characteristics of the battery.

### (Technique 12)

The negative electrode active material according to any one of Techniques 1 to 11, wherein the composite particle has an average particle diameter of 3 µm or more and 15 µm or less.

Owing to this configuration, the negative electrode active material according to Technique 12 can further improve the charge-discharge cycle characteristics of the battery.

### (Technique 13)

A battery including:
a negative electrode containing the negative electrode active material according to any one of Techniques 1 to 12;
a positive electrode; and
an electrolyte.

Owing to this configuration, the battery according to Technique 13 can improve charge-discharge cycle characteristics.

### EXAMPLES

Hereinafter, the present disclosure will be described in more detail using examples. The following examples are each merely one embodiment, and the present disclosure is not limited thereto.

### <Production of Negative Electrode Active Material>

### [Example 1]

Commercially available silicon particles (average particle diameter (D50): 1 µm) were prepared as precursor particles for composite particles. The silicon particles, lithium methanesulfonate (MSL) as an inorganic acid salt, and PVDF as a hydrophobic polymer were dispersed in water to prepare a dispersion liquid. The amount of MSL added to the precursor particles was 10 mass%, and the amount of PVDF added to the precursor particles was 10 mass%. Then, the dispersion liquid was spray-dried to obtain a granulated powder. The spray-drying device used was "Mini Spray Dryer S-300" manufactured by Nihon BUCHI K.K. The obtained granulated powder was classified. By the above method, PVDF infiltrated into the interiors of the precursor particles (silicon particles) to form a hydrophobic polymer phase, and a coating layer containing MSL and PVDF was also formed. Accordingly, a negative electrode active material of Example 1 was obtained. In this example, each precursor particle corresponds to the portion of the composite particle in the completed negative electrode active material excluding the first hydrophobic polymer. Therefore, the amount of MSL added to the precursor particle corresponds to the mass ratio of the mass of the inorganic acid salt contained in the coating layer to the mass of the portion of the composite particle excluding the first hydrophobic polymer. Further, the amount of PVDF added to the precursor particle corresponds to the total of the mass of the first hydrophobic polymer contained in the composite particle and the mass of the second hydrophobic polymer contained in the coating layer to the mass of the portion of the composite particle excluding the first hydrophobic polymer.

Thus, the negative electrode active material of Example 1 was produced. When surface analysis by XPS was performed on the produced negative electrode active material, it was confirmed that PVDF was present not only on the surface (i.e., the coating layer) but also inside the particles. Furthermore, when a cross-section of the negative electrode active material was formed using SM-09010 (Cross Section Polisher) manufactured by JEOL Ltd., and elemental mapping analysis by SEM-EDX was performed on the cross-section, it was confirmed that PVDF was also present between the silicon phases (silicon-containing phases).

### [Example 2]

A negative electrode active material was formed in the same manner as in Example 1, except that the addition amount of MSL and the addition amount of PVDF to the precursor particles were changed as shown in Table 1. Accordingly, a negative electrode active material of Example 2 was produced. When surface analysis by XPS was performed on the produced negative electrode active material as in Example 1, it was confirmed that PVDF was present not only on the surface (i.e., the coating layer) but also inside the particles. Furthermore, when elemental mapping analysis by SEM-EDX was performed on a cross-section of the negative electrode active material as in Example 1, it was confirmed that PVDF was present between the silicon phases (silicon-containing phases).

### [Example 3]

A negative electrode active material was formed in the same manner as in Example 1, except that the addition amount of MSL and the addition amount of PVDF to the precursor particles were changed as shown in Table 1. Accordingly, a negative electrode active material of Example 3 was produced. When surface analysis by XPS was performed on the produced negative electrode active material as in Example 1, it was confirmed that PVDF was present not only on the surface (i.e., the coating layer) but also inside the particles. Furthermore, when elemental mapping analysis by SEM-EDX was performed on a cross-section of the negative electrode active material as in Example 1, it was confirmed that PVDF was present between the silicon phases (silicon-containing phases).

### [Example 4]

A negative electrode active material was formed in the same manner as in Example 1, except that the addition amount of MSL and the addition amount of PVDF to the precursor particles were changed as shown in Table 1. Accordingly, a negative electrode active material of Example 4 was produced. When surface analysis by XPS was performed on the produced negative electrode active material as in Example 1, it was confirmed that PVDF was present not only on the surface (i.e., the coating layer) but also inside the particles. Furthermore, when elemental mapping analysis by SEM-EDX was performed on a cross-section of the negative electrode active material as in Example 1, it was confirmed that PVDF was present between the silicon phases (silicon-containing phases).

### [Example 5]

A negative electrode active material was formed in the same manner as in Example 1, except that the addition amount of MSL and the addition amount of PVDF to the precursor particles were changed as shown in Table 1. Accordingly, a negative electrode active material of Example 5 was produced. When surface analysis by XPS was performed on the produced negative electrode active material as in Example 1, it was confirmed that PVDF was present not only on the surface (i.e., the coating layer) but also inside the particles. Furthermore, when elemental mapping analysis by SEM-EDX was performed on a cross-section of the negative electrode active material as in Example 1, it was confirmed that PVDF was present between the silicon phases (silicon-containing phases).

### [Example 6]

A negative electrode active material was formed in the same manner as in Example 1, except that commercially available silicon particles (average particle diameter (D50): 0.4 µm) were prepared as precursor particles for composite particles, and the addition amount of MSL and the addition amount of PVDF to the precursor particles were changed as shown in Table 1. Accordingly, a negative electrode active material of Example 6 was produced. When surface analysis by XPS was performed on the produced negative electrode active material as in Example 1, it was confirmed that PVDF was present not only on the surface (i.e., the coating layer) but also inside the particles. Furthermore, when elemental mapping analysis by SEM-EDX was performed on a cross-section of the negative electrode active material as in Example 1, it was confirmed that PVDF was present between the silicon phases (silicon-containing phases).

### [Comparative Example 1]

The same precursor particles as in Example 1 were prepared. A hydrophobic polymer phase and a coating layer were not formed; in other words, the precursor particles were used directly as a negative electrode active material.

### [Comparative Example 2]

The same precursor particles as in Example 1 were prepared. PVDF was not added, and only MSL was added such that the amount of MSL added to the precursor particles was as shown in Table 1. A coating layer was formed in the same manner as in Example 1 except for these points. Accordingly, a negative electrode active material of Comparative Example 2 was produced.

### [Comparative Example 3]

The same precursor particles as in Example 1 were prepared. MSL was not added, and only PVDF was added such that the amount of PVDF added to the precursor particles was as shown in Table 1. A hydrophobic polymer phase and a coating layer were formed in the same manner as in Example 1 except for these points. Accordingly, a negative electrode active material of Comparative Example 3 was produced.

### [Comparative Example 4]

The same precursor particles as in Example 6 were prepared. A hydrophobic polymer phase and a coating layer were not formed; in other words, the precursor particles were used directly as a negative electrode active material.

### [Comparative Example 5]

The same precursor particles as in Example 6 were prepared. The precursor particles and MSL were dispersed in water to prepare a dispersion liquid. The amount of MSL added to the precursor particles was 15 mass%. The dispersion liquid was spray-dried using the same device as in Example 1 to obtain a granulated powder. Next, the obtained granulated powder and a powder of PVDF were mixed such that the amount of PVDF added to the precursor particles was 15 mass%. The obtained mixture was calcined under an inert atmosphere at a temperature equal to or higher than the melting point of PVDF to produce a negative electrode active material of Comparative Example 5. When surface analysis by XPS was performed on the produced negative electrode active material as in Example 1, it was confirmed that PVDF was present only on the surface (i.e., the coating layer) and not inside the particles. Furthermore, as a result of performing elemental mapping analysis by SEM-EDX on a cross-section of the negative electrode active material as in Example 1, it was confirmed that PVDF was not present between the silicon phases (silicon-containing phases).

### <Production of Battery>

Using the negative electrode active materials of Examples 1 to 6 and Comparative Examples 1 to 5, batteries of Examples 1 to 6 and Comparative Examples 1 to 5 were produced as follows.

### [Production of Negative Electrode]

The negative electrode active material produced in each example or comparative example and graphite were mixed at a mass ratio of negative electrode active material : graphite = 10:90 to obtain a mixture. The mixture was used as a negative electrode active material (hereinafter referred to as negative electrode active material mixture) for a negative electrode. The negative electrode active material mixture, carboxymethyl cellulose (CMC), and styrene butadiene rubber (SBR) were mixed at a mass ratio of negative electrode active material mixture : CMC : SBR = 97.5:1:1.5 to obtain a negative electrode mixture, and water was added to the negative electrode mixture, followed by stirring to prepare a negative electrode slurry. Next, the negative electrode slurry was applied to both sides of a copper foil which was a negative electrode current collector, and the coating film was dried and then rolled. The copper foil was cut to a predetermined size to produce a negative electrode in which a negative electrode mixture layer was formed on both sides of the negative electrode current collector. At this time, a negative electrode current collector exposed portion was provided at a part of the negative electrode.

### [Production of Positive Electrode]

A positive electrode active material, acetylene black, and PVDF were mixed at a mass ratio of positive electrode active material : acetylene black : PVDF = 95:2.5:2.5 to obtain a positive electrode mixture, and an appropriate amount of N-methyl-2-pyrrolidone (NMP) was added to the positive electrode mixture, followed by stirring to prepare a positive electrode slurry. A lithium transition metal composite oxide represented by LiNi_{0.88}Co_{0.09}Al_{0.03}O₂ was used as the positive electrode active material. Next, the positive electrode slurry was applied to both sides of an aluminum foil which was a positive electrode current collector, and the coating film was dried and then rolled. The aluminum foil was cut to a predetermined size to produce a positive electrode in which a positive electrode mixture layer was formed on both sides of the positive electrode current collector. At this time, a positive electrode current collector exposed portion was provided at a part of the positive electrode.

### [Preparation of Non-Aqueous Electrolyte]

A non-aqueous electrolyte was prepared by dissolving lithium hexafluorophosphate (LiPF₆) at a concentration of 1 mol/L in a mixed solvent in which ethylene carbonate (EC), ethyl methyl carbonate (EMC), and dimethyl carbonate (DMC) were mixed at a volume ratio of EC:EMC:DMC = 20:5:75.

### [Production of Non-Aqueous Electrolyte Secondary Battery]

A positive electrode lead made of aluminum was attached to the positive electrode current collector exposed portion of the positive electrode, and a negative electrode lead made of nickel was attached to the negative electrode current collector exposed portion of the negative electrode. The positive electrode and the negative electrode were spirally wound with a polyolefin separator interposed therebetween, and then pressed in the radial direction to produce a flat wound-type electrode assembly. This electrode assembly was housed in an exterior body made of an aluminum laminate sheet, the non-aqueous electrolyte was injected, and then an opening of the exterior body was sealed to obtain a battery.

### <Battery Evaluation>

The batteries of Examples 1 to 6 and Comparative Examples 1 to 5 were evaluated for initial charge-discharge efficiency and charge-discharge cycle characteristics by the following methods.

### (Initial Charge-Discharge Efficiency)

For the batteries of Examples 1 to 6 and Comparative Examples 1 to 5, under an ambient temperature of 25°C, constant-current charging was performed at a current of 0.3C until the voltage reached 4.2 V, and then constant-voltage charging was performed at a voltage of 4.2 V until the current reached 0.02C. Then, constant-current discharging was performed at a current of 0.5C until the voltage reached 2.5 V. By this charging and discharging, the initial charge-discharge efficiency of the batteries of Examples 1 to 6 and Comparative Examples 1 to 8 was determined.

The results are shown in Table 1. Table 1 shows relative values for Examples 1 to 5 and Comparative Examples 1 to 3 with the charge-discharge efficiency of Comparative Example 1 taken as a reference (100%). Table 1 also shows relative values for Example 6 and Comparative Examples 4 and 5 with the charge-discharge efficiency of Comparative Example 4 taken as a reference (100%).

### (Charge-Discharge Cycle Characteristics)

For the batteries of Examples 1 to 6 and Comparative Examples 1 to 5, under an ambient temperature of 25°C, constant-current charging was performed at a current of 0.3C until the voltage reached 4.2 V, and then constant-voltage charging was performed at a voltage of 4.2 V until the current reached 0.02C. Then, constant-current discharging was performed at a current of 0.5C until the voltage reached 2.5 V. The above charging and discharging were defined as one cycle, 100 cycles were performed, and a discharge capacity retention was calculated using the following formula. 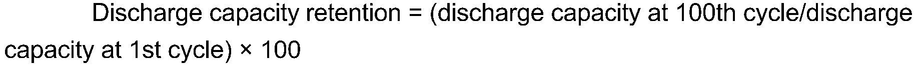 Discharge capacity retention = (discharge capacity at 100th cycle/discharge capacity at 1st cycle) × 100

The obtained capacity retention was regarded as the charge-discharge cycle characteristics. The results are shown in Table 1. Table 1 shows relative values for Examples 1 to 5 and Comparative Examples 1 to 3 with the capacity retention of Comparative Example 1 taken as a reference (100%). Table 1 also shows relative values for Example 6 and Comparative Examples 4 and 5 with the capacity retention of Comparative Example 4 taken as a reference (100%).

**[Table 1]**

| | Composite particle Si species (D50) | Coating layer | MSL addition amount (mass%) | PVDF addition amount (mass%) | Initial charge-discharge efficiency | Capacity retention |
|---|---|---|---|---|---|---|
| Example 1 | 1 µm | MSL+PVDF | 10 | 10 | 100.9 | 110.9 |
| Example 2 | 1 µm | MSL+PVDF | 5 | 8 | 100.7 | 109.8 |
| Example 3 | 1 µm | MSL+PVDF | 5 | 10 | 100.1 | 111.8 |
| Example 4 | 1 µm | MSL+PVDF | 5 | 15 | 100.7 | 114.9 |
| Example 5 | 1 µm | MSL+PVDF | 5 | 20 | 100.3 | 118.1 |
| Example 6 | 0.4 µm | MSL+PVDF | 15 | 15 | 101.0 | 163.4 |
| Comparative Example 1 | 1 µm | - | 0 | 0 | 100 | 100 |
| Comparative Example 2 | 1 µm | MSL | 10 | 0 | 100.5 | 106.4 |
| Comparative Example 3 | 1 µm | PVDF | 0 | 10 | 99.7 | 107.8 |
| Comparative Example 4 | 0.4 µm | - | 0 | 0 | 100 | 100 |
| Comparative Example 5 | 0.4 µm | MSL+PVDF | 15 | 15 | 100.9 | 150.8 |

### (Discussion)

As shown in Table 1, the negative electrode active materials of Examples 1 to 5, in which PVDF, a hydrophobic polymer, was present not only in the coating layer but also between the silicon phases inside the composite particles, exhibited improved capacity retention (charge-discharge cycle characteristics) of the batteries compared to the negative electrode active materials of Comparative Examples 1 to 3, which did not satisfy such a configuration. Similarly, the negative electrode active material of Example 6 exhibited improved capacity retention (charge-discharge cycle characteristics) of the battery compared to the negative electrode active materials of Comparative Examples 4 and 5. Also, the negative electrode active materials of Examples 1 to 5 exhibited improved initial charge-discharge efficiency compared to Comparative Example 1, which was used as a reference. Furthermore, when the negative electrode active material of Example 1 was compared with the negative electrode active material of Comparative Example 2 in which a coating layer (coating layer formed only of MSL) was provided and the addition amount of MSL was 10 mass% which was the same as in Example 1, Example 1 exhibited an improvement in initial charge-discharge efficiency as well as a significant improvement in capacity retention. The negative electrode active material of Example 6 also exhibited improved initial charge-discharge efficiency compared to Comparative Example 4, which was used as a reference, and Comparative Example 5, in which PVDF was contained in the coating layer but was not present inside the composite particles. That is, the negative electrode active material of Example 6 exhibited both improved charge-discharge cycle characteristics and improved initial charge-discharge efficiency compared to the negative electrode active materials of Comparative Examples 4 and 5, in which the average particle diameters of the composite particles were the same as in Example 6.

### INDUSTRIAL APPLICABILITY

The technology of the present disclosure is useful for batteries such as lithium-ion secondary batteries.

## Claims

1. A negative electrode active material comprising:
a composite particle; and
a coating layer covering at least a part of a surface of the composite particle, wherein
the composite particle includes particulate silicon-containing phases and a phase of a first hydrophobic polymer present between the silicon-containing phases, and
the coating layer contains an inorganic acid salt and a second hydrophobic polymer.

2. The negative electrode active material according to claim 1, wherein the silicon-containing phases have an average particle diameter of 3 µm or less.

3. The negative electrode active material according to claim 1, wherein a mass ratio of a total of a content of the first hydrophobic polymer and a content of the second hydrophobic polymer to a content of the inorganic acid salt is 0.3 or more and 10 or less.

4. The negative electrode active material according to claim 1, wherein a mass ratio of a mass of the inorganic acid salt contained in the coating layer to a mass of a portion of the composite particle excluding the first hydrophobic polymer is 2 mass% or more and 30 mass% or less.

5. The negative electrode active material according to claim 1, wherein a mass ratio of a total of a mass of the first hydrophobic polymer contained in the composite particle and a mass of the second hydrophobic polymer contained in the coating layer to a mass of a portion of the composite particle excluding the first hydrophobic polymer is 2 mass% or more and 40 mass% or less.

6. The negative electrode active material according to claim 1, wherein the inorganic acid salt includes at least one selected from the group consisting of lithium methanesulfonate, lithium ethanesulfonate, and lithium propanesulfonate.

7. The negative electrode active material according to claim 1, wherein at least one selected from the group consisting of the first hydrophobic polymer and the second hydrophobic polymer includes a fluorine-containing hydrophobic polymer.

8. The negative electrode active material according to claim 7, wherein the fluorine-containing hydrophobic polymer includes at least one selected from the group consisting of polyvinylidene fluoride, polytetrafluoroethylene, perfluoroalkoxy alkane, perfluoroethylene propene copolymer, ethylene tetrafluoroethylene copolymer, polychlorotrifluoroethylene, and ethylene chlorotrifluoroethylene copolymer.

9. The negative electrode active material according to claim 1, wherein the silicon-containing phases are silicon phases.

10. The negative electrode active material according to claim 1, wherein
the silicon-containing phases are each formed of a composite material, and
the composite material includes an ion-conducting phase and a silicon phase dispersed in the ion-conducting phase.

11. The negative electrode active material according to claim 10, wherein the ion-conducting phase includes at least one selected from the group consisting of an aluminate phase, a silicate phase, a silicon oxide phase, and a carbon phase.

12. The negative electrode active material according to claim 1, wherein the composite particle has an average particle diameter of 3 µm or more and 15 µm or less.

13. A battery comprising:
a negative electrode containing the negative electrode active material according to any one of claims 1 to 12;
a positive electrode; and
an electrolyte.
